# EUROPÄISCHE PATENTSCHRIFT

(11) **EP 2 197 652 B1**
(45) Veröffentlichungstag und Bekanntmachung des Hinweises auf die Patenterteilung: **23.03.2011**
(21) Anmeldenummer: 08804647.9
(22) Anmeldetag: 24.09.2008
(51) Int. Cl.: B29C 47/04, B29C 65/00, B32B 3/14

(54) **MEHRFARBIGE FOLIE UND VERFAHREN ZU IHRER HERSTELLUNG**
MULTICOLOR FILM AND METHOD FOR THE PRODUCTION THEREOF
FEUILLE MULTICOLORE ET SON PROCÉDÉ DE FABRICATION

(30) Priorität: 04.10.2007 DE 102007047565
(43) Veröffentlichungstag der Anmeldung: 23.06.2010
(73) Patentinhaber: Benecke-Kaliko AG, 30419 Hannover (DE)
(72) Erfinder: BÜHRING, Jürgen, 30900 Wedemark (DE); NEUHÄUSLER, Silke, 73084 Salach (DE); RAUSCH, Franz, 5151 Nussdorf (AT)
(74) Vertreter: Finger, Karsten
(86) Internationale Anmeldenummer: PCT/EP2008/062737
(87) Internationale Veröffentlichungsnummer: WO 2009/043767

(56) Entgegenhaltungen:
- DE-A1- 10 121 518
- DE-A1-102005 059 359
- US-A1- 2003 175 467

## Beschreibung

Die Erfindung betrifft eine mehrfarbige Folie aus mindestens zwei laminierten bzw. miteinander verbundenen unterschiedlich farbigen Folien, die ggf. mit weiteren Lack- oder Kleberschichen versehen ist, wobei die Oberfläche der Folien bzw. des Folienverbundes mit einer Oberflächenstruktur versehen, vorzugsweise geprägt ist. Weiterhin betrifft die Erfindung ein verfahren zur Verfahren zur Herstellung einer solchen mehrfarbigen Folie. Die Oberflächenstruktur besteht dabei z. B. aus einer lederähnlichen oder technischen Narbstruktur.

Die DE 195 30 757 A1 offenbart ein Verfahren und eine Vorrichtung zur Herstellung von zwei- oder mehrfarbigen Folien z. b. für Armaturenbretter, bei dem eine aus einem Kunststoff bestehende Trägerfolie mit Hilfe einer besonders geformten Extrusionsdüse mit weiteren Kunststoffschichten oder -folien unterschiedlicher Farbgebung belegt wird. Hierzu weist die Extruderdüse einen Spalt bzw. Austrittsquerschnitt für das Extrudat der Trägefolie aus, über dem zwei weitere Austrittsquerschnitte für die farbigen Deckschichten angeordnet sind, deren Ausflußwege oder -kanäle durch einen keilförmigen oder dreiecksförmigen Vorsprung bis kurz vor der Auflage des farbigen Obermateriales/Deckschichtmateriales auf der Trägerfolie getrennt sind. Hierdurch fließt das Extrudat für die Deckschichten erst kurz vor dem Auftreffen auf der Trägerfolie zusammen, wodurch sich zwar eine leidlich gute Nahtführung zwischen den unterschiedlichen Farbereichen ergibt, letztlich aber ein leichtes Mischen der Farben im Übergangsbereich nicht vermieden werden kann. Demzufolge ist diese Verfahren eher dort anwendbar, wo lediglich unterschiedliche Farbtiefen, beispielsweise also unterschiedliche Grautöne aneinander stoßen.

Die DE 101 21 518 A1 offenbart ein Verfahren zur Herstellung einer zwei- oder mehrfarbigen Schaumfolie, bei der eine tragende Unterschicht aus Schaumfolie mit einer Deckschicht belegt wird, die ihrerseits wieder aus mindestens zwei Schichten besteht, nämlich einer Trägerschicht und mindestens einer weiteren Schicht. Die Trägerschicht in einer ersten Farbe weist hierbei eingewalzte oder anderweitig profilierte Vertiefungen auf, in welche die weitere Schicht einer anderen Farbe so eingelegt wird, dass eine bündige Außenoberfläche zwischen Trägerschicht und weiterer Schicht entsteht. Das Aufbringen der Schichten erfolgt dabei durch einen Extrusionsprozess. Es ergeben sich recht gute Farbübergänge, jedoch erfordert das Herstellungsverfahren durch die erforderlichen eng tolerierten Profilierungen und mehrere Extruder einen erheblichen maschinellen und zeitlichen Aufwand.

Die US 2003 / 0175467 A1 offenbart ein Verfahren zur Herstellung einer mehrfarbigen Folie als Oberflächenbelag für Innenverkleidungsteile von Kraftfahrzeugen. Bei diesem Verfahren werden verschiedenfarbige Folien extrudiert und zur Vermeidung von Einbeulungen mit besonders geformten Überlappungszonen versehen, etwa mit jeweils komplementären Abschrägungen, konkav-konvexen Ausprägungen oder einfachen Stufenformen. Auch sind zick-zack-förmige Überlappungen offenbart.

Die DE 10 2005 059 359 A1 offenbart ebenfalls ein Verfahren zur Herstellung mehrfarbiger Folien, bei dem unterschiedlich farbige Folien zeitlich nacheinander so auf eine Trägerfolie aus Schaumkunststoff laminiert werden, dass die jeweils nachlaufende Folie die vorlaufende Folie in ihren Nahtbereichen überlappt.

Für die Erfindung bestand die Aufgabe, eine Folie bereitzustellen, die eine scharfe, deutlich konturierte und saubere Farbtrennung einzelner Farbschichten ohne Mischzonen auch bei komplizierten Formen der Farbtrennlinie aufweist, die kostengünstig und mit relativ geringem Fertigungsaufwand herzustellen ist und welche in hoher Qualität auch für das laminieren stark unterschiedlicher Farben geeignet ist.

Gelöst wir diese Aufgabe durch die Merkmale des Hauptanspruchs. Weitere vorteilhafte Ausbildungen sind in den Unteransprüchen offenbart.

Dabei weist die mehrfarbige Folie eine im Bezug auf die gesamte Breite der mehrfarbigen Folie mäandrierende oder gezackt konturierte Farbtrennlinie auf. Die farbigen Folien sind überlappend miteinander verbunden, wobei mindestens eine Folie im Überlappungsbereich eine geringere Dicke aufweist als in dem nicht überlappten Bereich. Dadurch wird die ansonsten bei zweifarbigen Folien übliche Dickstelle im Bereich der Stoßkanten oder der Überlappung vermieden und es entsteht eine Folie mit konstantem Dickenprofil.

Eine vorteilhafte Ausbildung besteht darin, dass eine untere farbige Folie über die gesamte Breite der mehrfarbigen Folie ausgebildet, über einen Teil ihrer Breite mit einen weiteren farbigen Folie verbunden ist und im Überlappungsbereich eine geringere Dicke aufweist als in dem nicht überlappten Bereich. Dadurch wird eine der farbigen Folien zur "tragenden" Folie, was den Herstellungsprozess vereinfacht und die Folienfestigkeit für nachfolgende Kaschierprozesse verbessert.

Eine vorteilhafte Ausbildung besteht darin, dass die farbigen Folien auf eine Trägerfolie aufkaschiert sind. Dabei wird als Trägerfolie in vorteilhafter Weise eine Folie aus thermoplastischem Schaumkunststoff eingesetzt wird. Auch damit wird die Handhabung bei der Fertigung erleichtert, da hier eine bereits vorhandene Unterlage die Führung und die Laminierung vereinfacht. Ebenfalls verbessert sich die Folienfestigkeit oder lässt sich besser auf den jeweiligen Anwendungsbereich einstellen.

Eine vorteilhafte Ausbildung besteht darin, dass die Folien aus thermoplastischem Olefin, aus PVC Kunststoffen oder aus Polyurethan-Kunststoffen bestehen. Diese Kunststoffarten lassen sich bei den zur Herstellung erforderlichen Temperatur- und Druckführungen gut verarbeiten und im erforderlichen flüssig-pastösem Herstellungszustand handhaben.

Ein besonders geeignetes Verfahren zur Herstellung solcher mehrfarbigen Folien ist dadurch gekennzeichnet, dass die mehrfarbige Folie nach dem Verbund der farbigen Folien vernetzt wird. Damit wird die Narbbeständigkeit verbessert und man vermeidet die Gefahr von Folienrissen oder -trennungen im bereich der Farbtrennline.

Eine vorteilhafte, weil einfache und gut steuerbare Ausbildung des Verfahrens besteht darin, dass mindestens eine der farbigen Folien ihre im Überlappungsbereich geringere Dicke über entsprechende Austrittsdüsen oder über einen verstellbaren Düsenspalt, bzw. über verstellbare so genannte "Düsenlippen" in einem Extrusionsprozess erhält. Dabei kann in vorteilhafter Ausbildung gleichzeitig der Verbund der farbigen Folien durch einen Extrusionsprozess erfolgt.

Eine weitere ebenfalls einfache und vorteilhafte Ausbildung des Verfahrens besteht darin, dass der Verbund der farbigen Folien während des Prägeprozesses der Oberfläche erfolgt. Damit werden separate Walzprozesse zur Verbindung der farbigen Folien vermieden.

Eine weitere vorteilhafte Ausbildung des Verfahrens besteht darin, dass der Verbund der farbigen Folien in einem separaten Laminierschritt vor dem Prägeprozess der Oberfläche erfolgt und nachdem die eine farbige Folie mit einer Schnittkontur versehen wurde.

Anhand eines Ausführungsbeispieles soll die erfindungsgemäße Folie näher gezeigt werden.

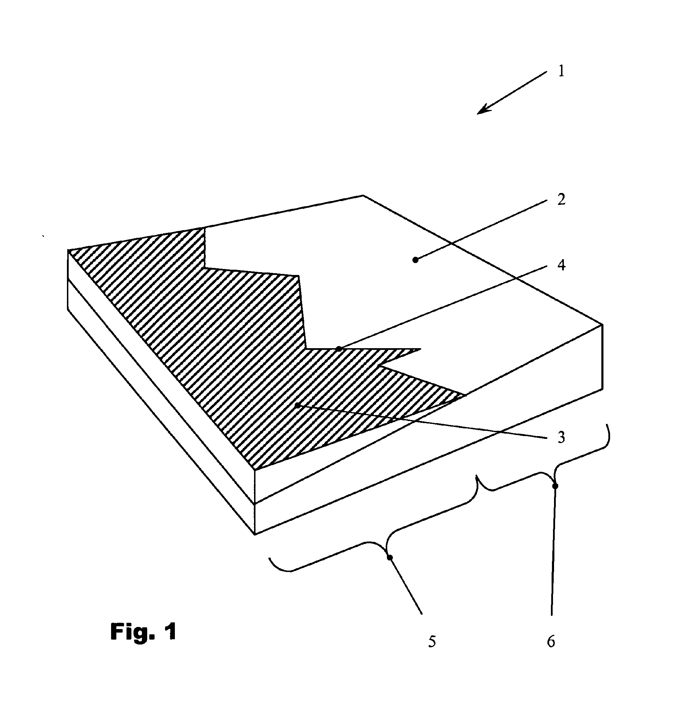

Fig. 1 zeigt hierzu eine mehrfarbige Folie 1 aus zwei laminierten bzw. miteinander verbundenen unterschiedlich farbigen Folien 2 und 3. Die Oberfläche der mehrfarbigen Folie 1 ist mit einer Lackschicht versehen, die Unterseite mit einer Kleberschicht. Die Oberfläche der Folien bzw. des Folienverbundes ist dabei mit einer Oberflächenstruktur, nämlich mit einer vor dem Aufbringen des Lackes gewalzten Prägung versehen.

Die die mehrfarbige Folie 1 weist eine im Bezug auf die gesamte Breite der mehrfarbigen Folie mäandrierende oder gezackt konturierte Farbtrennlinie 4 auf. Die farbigen Folien sind überlappend miteinander verbunden, wobei die untere tragende Folie 2 im Überlappungsbereich 5 eine geringere Dicke aufweist als in dem nicht überlappten Bereich 6. Dadurch wird die ansonsten bei zweifarbigen Folien übliche Dickstelle im Bereich der Stoßkanten oder der Überlappung vermieden und es entsteht eine Folie mit konstantem Dickenprofil.

### Bezugszeichenliste

### (Teil der Beschreibung)

- 1: Mehrfarbige Folie
- 2, 3: farbige Folien
- 4: Konturierte Farbtrennlinie
- 5: Überlappungsbereich
- 6: Nicht überlappter Bereich

## Patentansprüche

1. Verfahren zur Herstellung einer mehrfarbigen Folie (1) aus mindestens zwei laminierten bzw. miteinander verbundenen unterschiedlich farbigen Folien (2, 3), wobei die Folie ggf. mit weiteren Lack- oder Kleberschichen versehen ist, wobei die Oberfläche der Folien bzw. des Folienverbundes mit einer Oberflächenstruktur versehen, vorzugsweise geprägt ist, wobei die mehrfarbige Folie (1) eine im Bezug auf die gesamte Breite der mehrfarbigen Folie mäandrierende oder gezackt konturierte Farbtrennlinie (4) aufweist, wobei die farbigen Folien (2, 3) überlappend miteinander verbunden sind und wobei mindestens eine Folie im Überlappungsbereich (5) eine geringere Dicke aufweist als in dem nicht überlappten Bereich (6) **dadurch gekennzeichnet, dass** eine der farbigen Folien ihre im Überlappungsbereich geringere Dicke über entsprechende Austrittsdüsen oder über einen verstellbaren Düsenspalt in einem Extrusionsprozess erhält und dass die mehrfarbige Folie nach dem Verbund der farbigen Folien vernetzt wird.

2. Verfahren nach Anspruch 1, **dadurch gekennzeichnet, dass** die farbigen Folien auf eine Trägerfolie aufkaschiert werden.

3. Verfahren nach Anspruch 2, **dadurch gekennzeichnet, dass** die Trägerfolie eine Folie aus thermoplastischem Schaumkunststoff ist.

4. Verfahren nach Anspruch 1 bis 3, **dadurch gekennzeichnet, dass** die Folien aus thermoplastischem Olefin bestehen.

5. Verfahren nach Anspruch 1 bis 3, **dadurch gekennzeichnet, dass** die Folien aus PVC Kunststoffen oder aus Polyurethan-Kunststoffen bestehen.

6. Verfahren zur Herstellung einer mehrfarbigen Folie nach Anspruch 1 bis 5, **dadurch gekennzeichnet, dass** der Verbund der farbigen Folien durch einen Extrusionsprozess erfolgt.

7. Verfahren zur Herstellung einer mehrfarbigen Folie nach Anspruch 1 bis 5, **dadurch gekennzeichnet, dass** der Verbund der farbigen Folien während des Prägeprozesses der Oberfläche erfolgt.

8. Verfahren zur Herstellung einer mehrfarbigen Folie nach Anspruch 1 bis 5, **dadurch gekennzeichnet, dass** der Verbund der farbigen Folien in einem separaten Laminierschritt vor dem Prägeprozess der Oberfläche erfolgt.

## Claims

1. Method for producing a multicolour film (1) from at least two differently coloured films (2, 3) laminated or bonded to one another, the film possibly being provided with further layers of coating or adhesive, the surface of the films or the film laminate being provided with a surface texture, preferably embossed, the multicolour film (1) having a colour separating line (4) contoured in a meandering or zigzagging manner with respect to the overall width of the multicolour film, the colour films (2, 3) being bonded to one another in an overlapping manner, and at least one film having a smaller thickness in the region of overlap (5) than in the non-overlapped region (6), **characterized in that** one of the colour films is provided with its smaller thickness in the region of overlap by means of corresponding dies or by means of an adjustable die gap in an extrusion process and **in that** the multicolour film is crosslinked after the colour films have been laminated.

2. Method according to Claim 1, **characterized in that** the colour films are laminated onto a backing film.

3. Method according to Claim 2, **characterized in that** the backing film is a film of thermoplastic foam material.

4. Method according to Claims 1 to 3, **characterized in that** the films consist of thermoplastic olefin.

5. Method according to Claims 1 to 3, **characterized in that** the films consist of PVC plastics or of polyurethane plastics.

6. Method for producing a multicolour film according to Claims 1 to 5, **characterized in that** the lamination of the colour films is performed by an extrusion process.

7. Method for producing a multicolour film according to Claims 1 to 5, **characterized in that** the lamination of the colour films is performed during the process of embossing the surface.

8. Method for producing a multicolour film according to Claims 1 to 5, **characterized in that** the lamination of the colour films is performed in a separate laminating step before the process of embossing the surface.

## Revendications

1. Procédé de fabrication d'une feuille (1) polychrome constituée d'au moins deux feuilles (2, 3) de couleurs différentes stratifiées ou reliées l'une à l'autre,
la feuille étant dotée d'autres couches de vernis ou d'adhésif,
la surface de la feuille ou du composite de feuille étant dotée d'une structure de surface et étant de préférence gaufrée,
la feuille polychrome (1) présentant une ligne (4) de séparation des couleurs qui s'étend en méandres ou en zigzag sur toute la largeur de la feuille polychrome,
les feuilles colorées (2, 3) étant reliées l'une à l'autre par superposition et au moins une feuille présentant dans la zone de superposition (5) une épaisseur moindre que dans la zone non superposée (6), **caractérisé en ce que**
l'une des feuilles colorées reçoit son épaisseur plus faible dans la zone de superposition par des tuyères de sortie appropriées ou par ajustement de l'interstice de tuyère dans une opération d'extrusion et **en ce que** la feuille polychrome est réticulée après assemblage des feuilles colorées.

2. Procédé selon la revendication 1, **caractérisé en ce que** les feuilles colorées sont contrecollées sur une feuille de support.

3. Procédé selon la revendication 2, **caractérisé en ce que** la feuille de support est une feuille en mousse synthétique thermoplastique.

4. Procédé selon les revendications 1 à 3, **caractérisé en ce que** les feuilles sont constituées d'une oléfine thermoplastique.

5. Procédé selon les revendications 1 à 3, **caractérisé en ce que** les feuilles sont constituées de matière synthétique à base de PVC ou de matière synthétique à base de polyuréthane.

6. Procédé de fabrication d'une feuille polychrome selon les revendications 1 à 5, **caractérisé en ce que** l'assemblage des feuilles colorées s'effectue par une opération d'extrusion.

7. Procédé de fabrication d'une feuille polychrome selon les revendications 1 à 5, **caractérisé en ce que** l'assemblage des feuilles colorées s'effectue pendant l'opération de gaufrage de la surface.

8. Procédé de fabrication d'une feuille polychrome selon les revendications 1 à 5, **caractérisé en ce que** l'assemblage des feuilles colorées s'effectue dans une étape séparée de stratification avant l'opération de gaufrage de la surface.
